# EUROPEAN PATENT SPECIFICATION

(11) **EP 0 643 383 B1**
(45) Date of publication and mention of the grant of the patent: **01.04.1998**
(21) Application number: 93118138.2
(22) Date of filing: 09.11.1993
(51) Int. Cl.: G11B 5/55, G11B 21/08

(54) **Magnetic head adjustment system**
Magnetkopf-Justierungsvorrichtung
Système d'ajustement de tête magnétique

(30) Priority: 15.09.1993 US 122197
(43) Date of publication of application: 15.03.1995
(73) Proprietor: TANDBERG DATA A/S, 0808 Oslo 8 (NO)
(72) Inventor: Guttorm, Rudi, N-1472 Fjellhamer (NO); Nils, Martin Teien, N-3125 Tonsberg (NO)
(74) Representative: Goddar, Heinz J., Dr.

(56) References cited:
- DE-A- 3 112 895
- US-A- 4 609 959
- US-A- 5 105 322

## Description

### BACKGROUND OF THE INVENTION

The invention relates generally to magnetic tape recorders, and, in particular, to a mechanism for supporting and adjusting the azimuth angle of a magnetic tape head relative to the direction of travel of the magnetic tape.

Magnetic tape recorders are used, for example, as memory back-up devices for computer systems. In connection with such devices, means are provided for positioning a magnetic read/write head to tracks of a magnetic tape, the tracks extending parallel and longitudinal on the length of the magnetic tape in the direction of travel of the tape across the magnetic head. At the end of a track, the magnetic head must be moved transversely across the tape to access an adjacent parallel track before the tape direction is reversed and the adjacent track is accessed.

The magnetic head must be capable of moving transversely across the tape in increments at least as small as the width of a track, and be accurately maintained at each position. It is known to position a magnetic head to various tracks of a magnetic tape in a magnetic tape recorder as described in U.S. Patent 4,609,959 according to which claims 1 and 5 have been cast in the two-part form. The magnetic head is mounted at one end of a head carriage while the other end of the carriage is disposed for axial movement along the length of a vertically extending shaft. The other end of the carriage is displaced along the shaft via a worm wheel. The worm wheel is internally threaded for interaction with exterior threads on the shaft, and is rotated by a motor-driven worm gear.

It is also known in connection with devices for positioning a magnetic head to various tracks of a magnetic tape to enable the shaft to be slightly tilted along its azimuth and zenith axes to compensate for manufacturing tolerances. Typically, this compensation is performed once in the factory to achieve the necessary alignment of the magnetic head to the magnetic tape travel path. For example, the need for such adjustment of the shaft vertical axis is described in U.S. Patent 5,105,322. An object of the present invention is to provide a simple and reliable method and apparatus for factory adjustment of the magnetic head along its azimuth and zenith axes.

Such adjusting of azimuth and zenith directions of the magnetic head can for example be performed in the device as disclosed in U.S. patent 4 609 959. A bearing plate of a shaft that carries the magnetic head via a magnetic head support has to be dismounted, then adjusting has to be performed, and afterwards the bearing plate has to be again mounted to the support frame. Such method is quite complicated and might lead to unreliable results, since displacement of the previously adjusted magnetic head might occur, e.g. during the final mounting procedure of the bearing plate to the frame.

### SUMMARY OF THE INVENTION

The invention is defined in claims 1 and 5.

A magnetic head is secured to a head carriage in a magnetic tape recorder. The head carriage is supported on a shaft extending generally transversely of the length of tape in a tape cartridge which is run past the head. The head carriage is displaceable in the axial direction of the shaft for positioning the head to a desired track of the magnetic tape.

The shaft is fixed in a frame, but its axial centerline position is inventively adjustable. This permits the magnetic head to be adjustably aligned in azimuth and zenith axes defined by reference lines relating to disposition of the magnetic tape cartridge in the magnetic tape recorder. The frame holds one end of the shaft disposed for pivotal movement via a joint support, and holds the other end of the shaft via a specially designed washer. The washer is pre-loaded axially to the shaft and abuts against the frame. By sliding the washer against the frame, the alignment of the magnetic head is adjusted in the azimuth and zenith direction.

A tool fits against the washer-supported end of the shaft to slide the washer against the frame. The tool may work together with an optical device for referencing the centerline axis of the shaft (and hence aligning the magnetic head) relative to the magnetic tape cartridge reference lines.

### BRIEF DESCRIPTION OF THE DRAWINGS

Figure 1 is a plan, top view of a magnetic head positioning assembly, as mounted in a magnetic head support frame, according to the invention.

Figure 2 is a cross-sectional, side elevational view taken along the lines II-II of Figure 1.

### DETAILED DESCRIPTION OF THE PREFERRED EMBODIMENTS

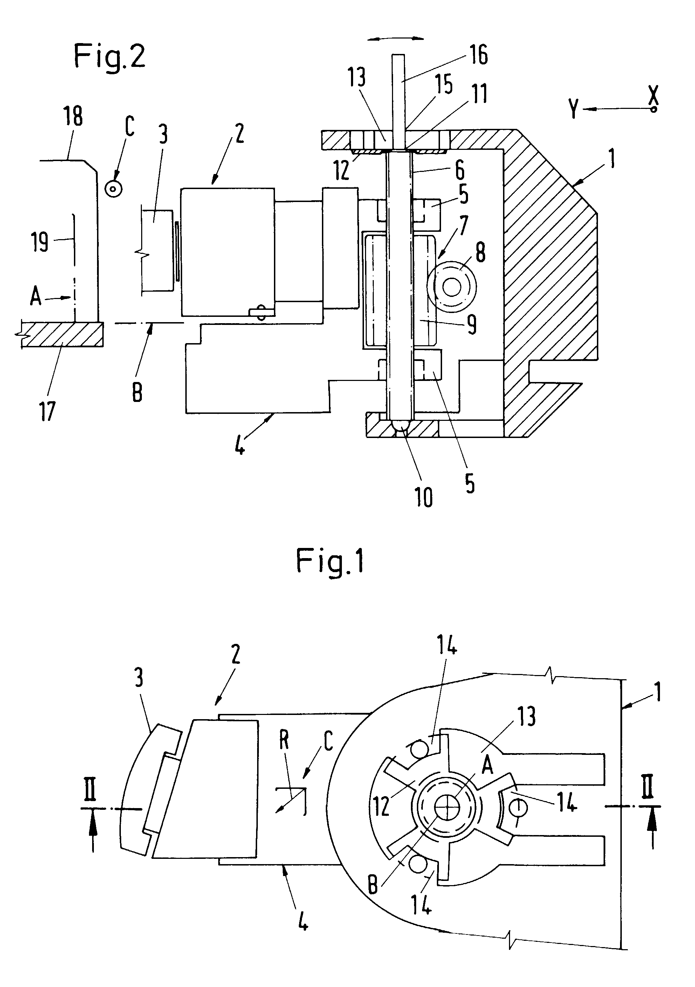

With reference to Figures 1 and 2, there is shown a support frame 1 for carrying a magnetic read/write head assembly 2 in a magnetic tape recorder. The head assembly 2 includes a magnetic head 3 for record and playback of information signals contained on a length of magnetic tape being conducted past the magnetic head 3, such as in known fashion. The magnetic head 3 is supported on the assembly via a carriage 4 having bracket members 5 which are supported for sliding movement along a generally vertically extending shaft 6.

The shaft 6 is threaded and fixed in the support frame 1, except, as described below, its axial centerline position can be adjusted. A motor drive 7 serves to bring about controlled rotation of a worm gear 8 which rotates a worm wheel 9. The worm wheel 9 is internally threaded for interaction with the threads of the shaft 6. Movement of the worm wheel 6 along the shaft adjusts the vertical tracking position of the head 3 relative to the tape. The motor drive 7 may use a DC motor or a stepping motor.

The shaft 6 is mounted in a frame-fixed manner in the tape recorder for record/playback operation of the magnetic head 3. However, the longitudinal or vertical axis of the shaft 6 may be slightly tilted for adjustment in the azimuth (X-Z) and zenith (Y-Z) planes to compensate for manufacturing tolerances, in accordance with the invention. Typically, this compensation is performed once in the factory to achieve the necessary alignment of the magnetic head 3 to the magnetic tape path. Accordingly, the shaft 6 is disposed at one end for pivotal movement by a joint connection 10 to the frame 1. This one end of the shaft 6 does not move. The other end of the shaft 6 is formed with a head 11 which friction-fits, within acceptable tolerances, in a central opening formed on a washer bracket 12. The washer bracket 12 has a surface expanse which extends greatly outward transversely of the longitudinal axis of the shaft 6.

As shown in Figure 1, the washer bracket 12 may be of a cloverleaf-type design; and is disposed beneath an opening 13 formed in the frame 1. The frame opening 13 permits access to the leadscrew head 11 from above. The frame 1 extends into the opening 13 with solid wall material, such as extension portions 14 corresponding to the leaves of the washer bracket 12, so as to overlie outer surface areas of the washer 12. The washer bracket 12 is made of a stiff, but yet resilient, material, such as a thin gauge metal. Accordingly, the washer bracket 12 has its outer surfaces directly abutting against the frame 1 at the locale of the opening 13, and the washer bracket 12 is pre-loaded axially to the shaft 6 and serves to support the upper end of the shaft 6 in fixed position on the frame 1.

This disposition of the upper end of the shaft 6 relative to the frame 1 may be easily adjusted given the construction of the invention. The head 11 of the shaft is formed with a suitable recess 15, which may be conical, for receiving a linearly extending tool 16, the tip of which fits snugly in the shaft head recess 15. By engaging the tip of the tool 16 against or onto the head 11 of the shaft 6, as shown in Figure 2, and applying a suitable force for moving the leadscrew head, the washer bracket 12 may be slid relative to the frame portions 14 against which the washer abuts in a direction transverse to the axial direction of the shaft 6, so as to adjust the relative tilt of the shaft centerline axis extending from its end support 10. As discussed above, typically this adjustment of the shaft in its azimuth and zenith axes is performed in the factory to achieve the necessary alignment of the tape head 3 to the magnetic tape path. For example, with reference to Figure 1, an original axis disposition of the shaft head A may be adjusted to a compensating or preferred final-version axis disposition B by force application on the head 11 via the tool 16 moving the shaft head in the direction R as shown in the diagram C on Figure 1.

The tool 16 may work together with an optical device to permit azimuth and zenith correlation between the magnetic head 3 and the reference planes associated with the tape being applied to the head for record or playback. The tape structure provides three visual points of reference, as shown in Figure 2. Thus, a frame support 17 on which a tape cartridge 18 rests provides a "B" plane reference, the tape 19 running past the head provides an "A" plane reference, and the facing surface of the cartridge 18 provides a "C" plane reference. A simple mathematic formula might be used to calculate the magnetic head's angular deviation in the azimuth and zenith directions.

## Claims

1. An apparatus for providing adjustment of a read/write head (3) of a magnetic tape recorder comprising a support frame (1) carrying a motor drive (7), a shaft (6) mounted on said frame (1), and a carriage (4) carrying said head (3) and connected on said shaft (6) such that said carriage (4) is transported axially along said shaft (6) when said motor drive (7) is engaged,
characterized in that
a washer bracket (12) is connecting one end of said shaft (6) to said frame (1), said washer bracket (12) having a pre-loaded bias directly axially on said shaft (6), whereby said one end of said shaft (6) is resiliently adjustable disposed on said frame (1), whereby said adjustment of said read/write head (3) is performed along azimuthal and zenithal directions with respect to an axis defined by said shaft (6).

2. The apparatus of claim 1, wherein said other end of said shaft (6) is pivotably mounted to said frame (1).

3. The apparatus of claims 1 or 2, wherein said washer bracket (12) frictionally abuts said frame (1) and is slidable on said frame (1) in a direction transverse to the axial direction of said shaft (6).

4. The apparatus of claim 3, wherein said one end of said shaft (6) is formed with a recess (15), and further comprising a tool (16) having a tip shaped to fit in said recess (15), for adjusting said shaft (6) one end and said washer bracket (12) relative to said frame (1).

5. A method for positioning a read/write magnetic head (3) in a magnetic tape recorder, comprising:
providing a frame (1);
mounting said magnetic head (3) to a shaft (6) along which the position of said magnetic head is adjustable axially;
characterised by:
supporting one end of said shaft (6) in said frame (1) so as to permit pivotal movement of said shaft (6);
supporting the other end of said shaft (6) in a washer bracket (12); and
resiliently adjustably disposing said washer bracket (12) on said frame (1).

6. The method of claim 5, further comprising:
forming said other end of said shaft (6) with an exposed recess (15); and providing a tool (16) having a tip shaped to fit in said recess (15), for adjusting said shaft other end and said washer bracket (12) relative to said frame (1).

## Patentansprüche

1. Vorrichtung zum Einstellen eines Lese/Schreibkopfes (3) eines Magnetbandrekorders, mit einem Trägerrahmen (1) welcher einen Motorantrieb (7) trägt, einer Welle (6), die auf dem Rahmen (1) angebracht ist, und einem Wagen (4), der den Kopf (3) trägt und derart mit der Welle (6) verbunden ist, daß der Wagen (4) axial entlang der Welle (6) transportiert wird, wenn der Motorantrieb (5) arbeitet,
dadurch gekennzeichnet, daß
eine Unterleg-Lagerscheibe (12) eine Ende der Welle (6) mit dem dem Rahmen (1) verbindet, wobei die Unterleg-Lagerscheibe (12) eine Vorspannung direkt auf die Welle (6) hat, so daß das eine Ende der Welle (6) nachgiebig einstellbar auf dem Rahmen (1) angeordnet ist, wodurch die Einstellung des Lese/Schreib-Kopfes (3) entlang Azimut- und Zenitrichtung in bezug auf eine Achse, die durch die Welle (6) definiert ist, durchgeführt wird.

2. Vorrichtung nach Anspruch 1, bei der das andere Ende der Welle (6) schwenkbar an dem Rahmen (1) angebracht ist.

3. Vorrichtung nach Anspruch 1 oder 2, bei der die Unterleg-Lagerscheibe (12) durch Reibkraft an dem Rahmen (1) anliegt und auf dem Rahmen (1) in einer Richtung quer zur Axialrichtung der Welle (6) gleiten kann.

4. Vorrichtung nach Anspruch 3, bei der ein Ende der Welle (6) mit einer Ausnehmung (15) versehen ist und die weiterhin ein Werkzeug (16) mit einer Spitze aufweist, die so geformt ist, daß sie in die Ausnehmung (15) paßt, zum Einstellen des einen Endes der Welle (6) und der Unterleg-Lagerscheibe (12) relativ zu dem Rahmen (1).

5. Verfahren zum Positionieren eines Lese/Schreib-Magnetkopfes (3) in einem Magnetbandrekorder, das aufweist:
Bereitstellen eines Rahmens (1);
Anbringen des Magnetkopfes (3) an einer Welle (6) entlang der die Position des Magnetkopfes axial einstellbar ist;
gekennzeichnet durch:
Halten eines Endes der Welle (6) in dem Rahmen (1), um so die Schwenkbewegung der Welle (6) zu erlauben;
Halten des anderen Endes der Welle (6) in einer Unterleg-Lagerscheibe (12); und
nachgiebig einstellbares Anordnen der Unterleg-Lagerscheibe (12) auf dem Rahmen (1).

6. Verfahren nach Anspruch 5, das weiter aufweist:
Ausbilden des anderen Endes der Welle (6) mit einer freiliegenden Ausnehmung (15) und Bereitstellen eines Werkzeuges (16), das eine Spitze hat, welche so geformt ist, daß sie in die Ausnehmung (15) paßt, zum Einstellen des anderen Endes der Welle und der Unterleg-Lagerscheibe (3) relativ zu dem Rahmen (1).

## Revendications

1. Dispositif pour assurer le réglage d'une tête (3) de lecture/écriture d'un enregistreur de bande magnétique comportant un bâti support (1) portant un entraînement moteur (7), un axe (6) monté sur le bâti (1), et un chariot (4) portant la tête (3) et relié à l'axe (6) de telle sorte que le chariot (4) est transporté axialement le long de l'axe (6) quand l'entraînement moteur (7) est engagé,
caractérisé par le fait que
un support rondelle (12) relie une extrémité de l'axe (6) au bâti (1), le support rondelle (12) ayant une force de précontrainte dirigée axialement selon l'axe (6), au moyen duquel ladite extrémité de l'axe (6) est disposée élastiquement réglable sur le bâti (1), au moyen duquel le réglage de la tête de lecture/écriture est réalité le long des directions azimutale et zénitale par rapport à un axe défini par l'axe (6).

2. Dispositif selon la revendication 1, dans lequel ladite autre extremité de l'axe (6) est montée pivotante sur le bâti (1).

3. Dispositif selon l'une des revendications 1 et 2, dans lequel le support rondelle (12) aboute par friction le bâti (1) et est coulissant sur le bâti (1) dans une direction transverse à la direction axiale de l'axe (6).

4. Dispositif selon la revendication 3, dans lequel ladite extrémité de l'axe (6) est formée avec un évidement (15), et comprend en outre un outil (16) présentant une extrémité conformée pour aller dans l'évidement (15), afin de régler ladite extrémité de l'axe (6) et le support rondelle (12) par rapport au bâti (1).

5. Procédé pour positionner une tête magnétique de lecture/écriture (3), dans un enregistreur de bande magnétique, comprenant :
- la fourniture d'un bâti (1) ;
- le montage de la tête magnétique (3) sur un axe (6) le long duquel la position de la tête magnétique est axialement réglable ;
caractérisé par
le support de l'une des extrémités de l'axe (6) dont le bâti (1) de façon à permettre un mouvement pivotal de l'axe (6) ;
le support de l'autre extrémité de l'axe (6) dans un support rondelle (12) ; et
la disposition de façon réglable élastiquement de support rondelle (12) sur le bâti (1).

6. Procédé selon la revendication 5, comportant en outre :
- la formation de ladite autre extrémité de l'axe (6) avec un évidement exposé (15) et la founiture d'un outil (16) présentant une extrémité conformée pour aller dans l'évidement (15), afin de régler ladite autre extrémité de l'axe et le support rondelle (12) par rapport au bâti (1).
